# EUROPEAN PATENT APPLICATION

(11) **EP 4 653 854 A1**
(43) Date of publication of application: **26.11.2025**
(21) Application number: 25172079.3
(22) Date of filing: 23.04.2025
(51) Int. Cl.: G01N 21/90, B65G 17/00, B65G 17/22, B65G 47/90, B65G 47/86, B65G 47/34

(54) **THE APPARATUS AND METHOD FOR INSPECTING FLEXIBLE BAGS**

(30) Priority: 23.05.2024 IT 202400011707
(71) Applicant: G.F. S.p.A., 43040 Solignano (Parma) (IT)
(72) Inventor: NEVA, Gabriele, 43040 SOLIGNANO (PARMA) (IT); ESPOSITO, Diego, 43040 SOLIGNANO (PARMA) (IT); ANTONIAZZI, Daniele, 43040 SOLIGNANO (PARMA) (IT)
(74) Representative: Monelli, Alberto

(57) **Abstract**

Apparatus for inspecting flexible bags containing a liquid or viscous product comprising:
- a line (2) for advancing the bags;
- first means (31) for gripping a first bag, said first bag forming part of said bags;
- first means (41) for lifting at least one part of the first gripping means (31); said first lifting means (41) allowing the inclination of the first gripping means (31) to be changed with respect to a fictitious horizontal plane;
- first rotatable means (51) that places in rotation the first gripping means (31) on themselves around a first rotation axis (310) that is transverse to the line (2) for advancing the bags;
- means (6) for detecting defects of the bags and/or their contents; said means (6) for detecting defects comprising first means (61) for visual inspection of the first bag and/or its contents;
-means (7) for rejecting the bags according to information coming from the means (6) for detecting the defects.

The apparatus 1 is a linear machine, not a carousel rotatable around its own rotation axis.

## Description

The present invention relates to an apparatus and a method for inspecting flexible bags containing a liquid or viscous product.

Such carousels have been known to be manually inspected by operators. In this case, the operators receive the bags on an inspection table and manually reject those with defects.

However, this solution is subject to a margin of human error (thus presenting a component related to subjectivity and skill/experience of the operator). Moreover, the number of bags processed in the unit of time is not very high.

An inspection apparatus is also known to comprise:
- a rotatable carousel;
- means overturning the bags placed on the carousel upwards and downwards and, in these overturned positions, placing them in rotation on themselves.

In this way, the inspection means is able to observe the bags from various perspectives, and furthermore any particle defects detach from the bag and go into suspension. Defects are therefore easier to detect. Furthermore, shaking the bag (and thus its contents) favours the detection of a moving particle defect. In particular, inspection after rotation reduces the risk of gaseous bubbles present within the liquid being mistaken for foreign particles or defects in the container. The inspection systems must be either carousel following systems or systems integral with the carousel (with greater complexity of the electronic part being placed in rotation). In addition, the carousel with constant diameter of the carousel defines a large footprint in all directions, constituting an obstacle to its proper placement within the layout of a plant/shed.

Aim of the present invention is to provide an apparatus and method for inspecting flexible bags that are able to optimise productivity and footprint. The specified technical task and purposes are substantially achieved by an apparatus and method for inspecting flexible bags comprising the technical features set forth in one or more of the preceding claims. Additional features and advantages of the present invention will emerge more clearly from the approximate and thus non-limiting description of a preferred but not exclusive embodiment of an apparatus and method for inspecting flexible bags as illustrated in the accompanying drawings, in which:

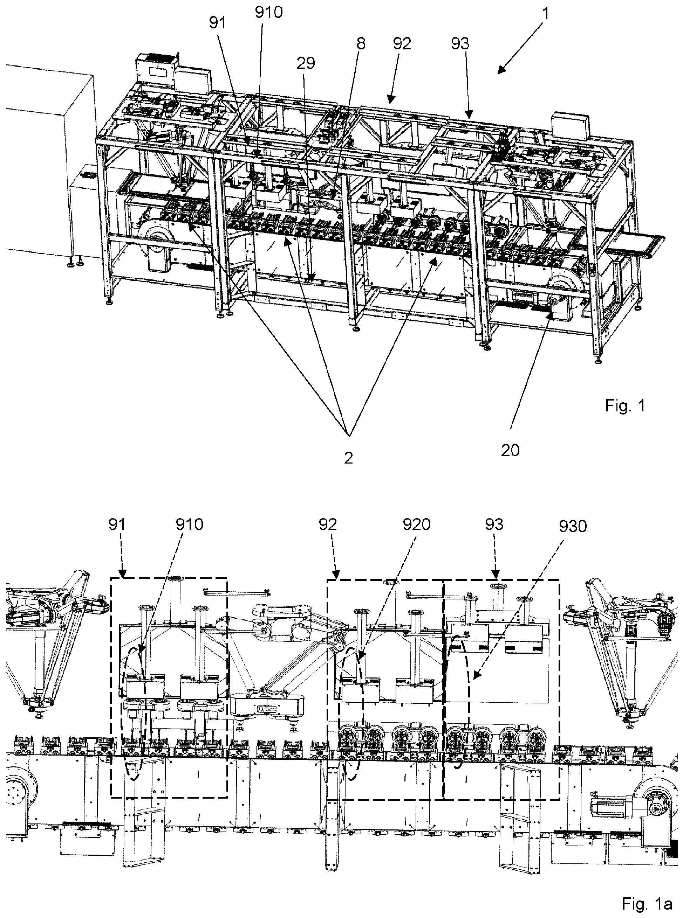

- figure 1 shows a perspective view of an apparatus according to the present invention;
- figure 1a shows a side view of the apparatus in figure 1;

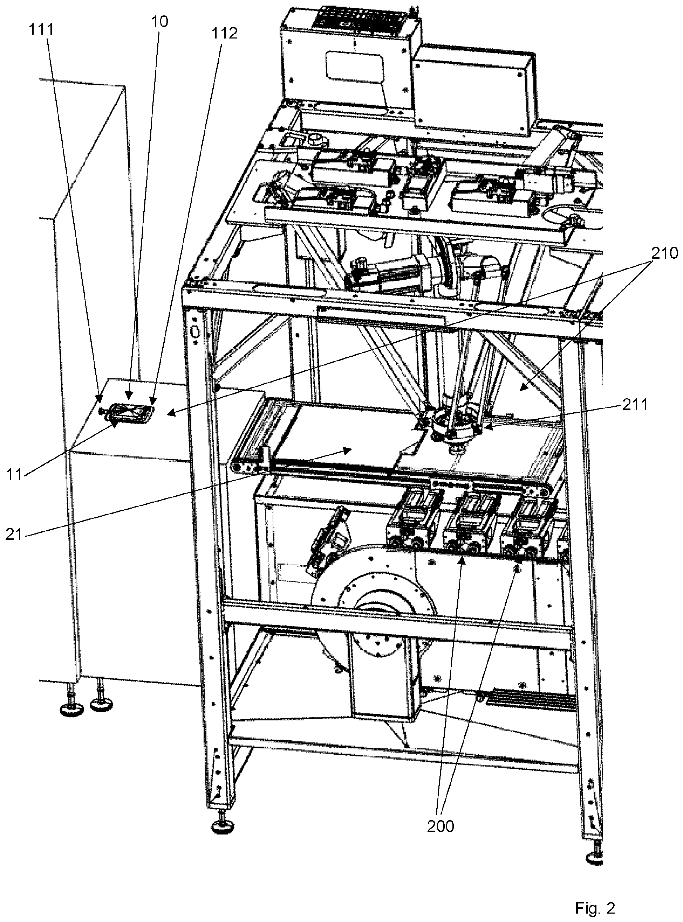

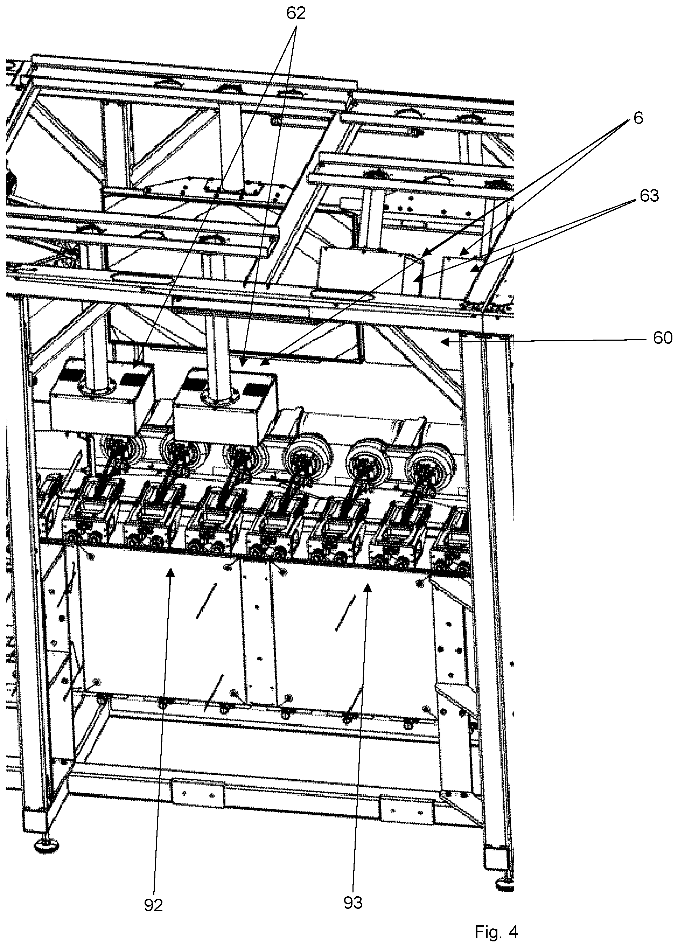

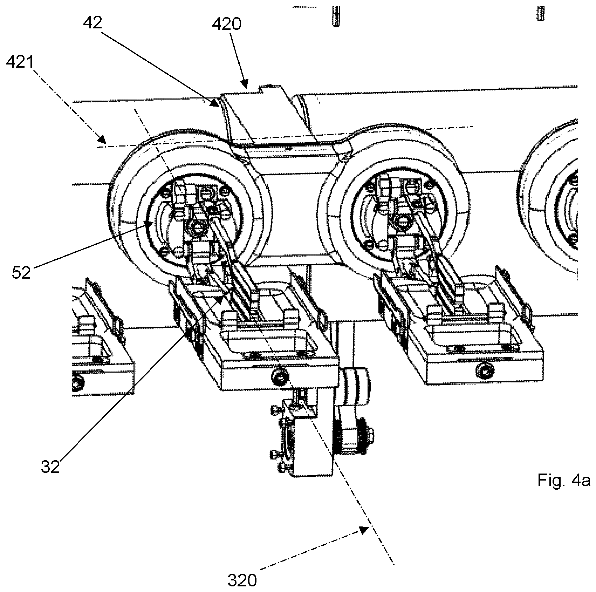

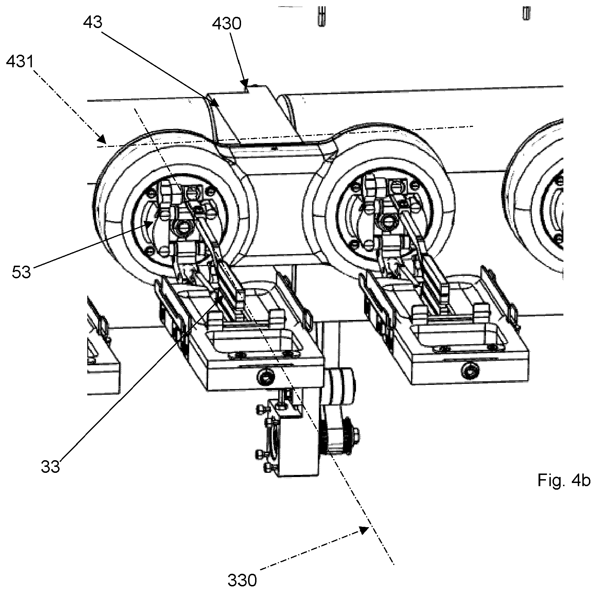

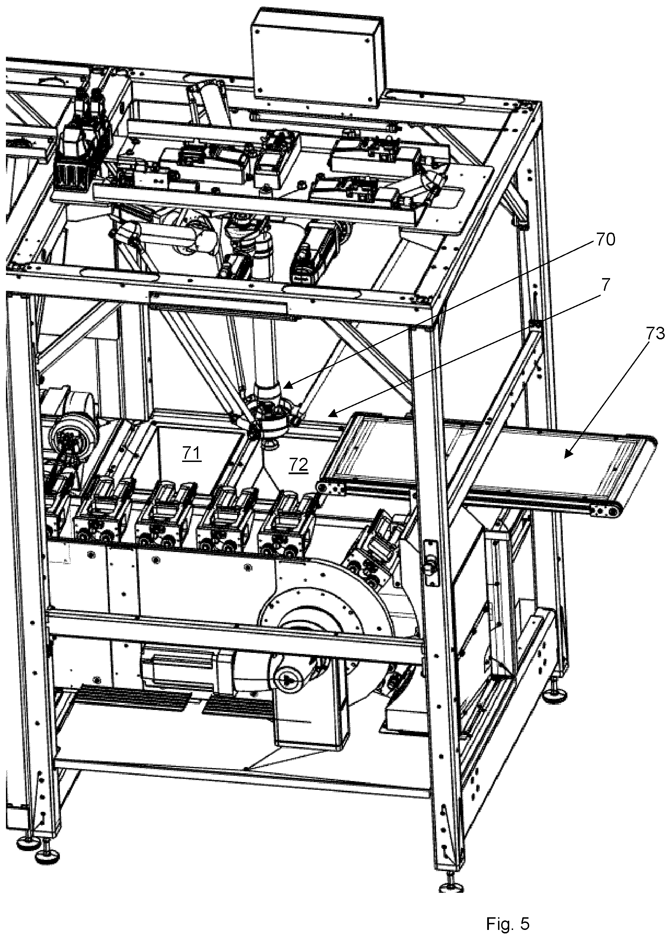

- figures 2, 3, 4, 5 show detailed views of figure 1;
- figures 3a, 3b highlight some of the components in figure 3;
- figures 3c and 3d show a figure 3 component in two different operating configurations;
- figures 4a and 4b highlight some of the components in figure 4.

In the accompanying figures, reference number 1 has been used to indicate an apparatus for inspecting flexible bags containing a liquid or viscous product (e.g. organic liquids or other). The bag 10 preferably allows the contents to be seen (it is typically at least partially transparent or at least not completely opaque).

Suitably, the apparatus 1 comprises a system 210 for feeding the bags. This feeding system 210 comprises a loading station 21 where the bags are made available. Advantageously, the bags can arrive at this loading station 21 in a predefined orientation or without such a predefined orientation. For example, the feeding system 210 may comprise a conveyor belt that transfers the bags to the loading station 21.

The apparatus 1 is a linear machine, not a carousel rotatable around its own rotation axis. Suitably, the apparatus 1 also comprises a line 2 for advancing the bags. This line 2 for advancing the bags lies downstream of the feeding system 210 and in particular of the loading station 21. The line 2 for advancing the bags is suitably rectilinear. The advancement line 2 therefore extends entirely along an imaginary vertical plane. Inlet and outlet of the bags from the line 2 are preferably aligned along the vertical plane.

In a non-preferred, non-illustrated variant, the advancement line 2 extends according to a non-circular circuit (the predominant extent dimension is, in plan, greater than the other orthogonal thereto; advantageously at least double the other). The circuit lies in a horizontal plane. For example, it can be an ellipse or a rectangle. The operating stations are therefore distributed along this circuit.

Returning to the illustrated exemplary solution, the feeding system 210 may comprise a robot 211 for picking up the bags and positioning them along the advancement line 2. Suitably, the positioning of the bags along the advancement line 2 occurs according to a predefined orientation. Suitably, the advancement line 2 comprises one or more pockets 200 to accommodate the bags. Suitably, these pockets 200 follow one another along the advancement line 2. Advantageously, the robot 211 picks up the bags placed on the loading station 21 (which can also possibly perform the function of a temporary accumulation buffer). The robot 211 advantageously comprises at least suction cup means (this is a suction system that allows the bag to be picked up and moved). In an alternative solution, the robot 211 could comprise a gripper for moving the bags. Preferably, but not necessarily, the robot 211 handles one bag at a time. Suitably, the robot 211 allows the bag to be oriented so that it is arranged according to said predefined orientation on the advancement line 2 (in particular, the robot 211 allows the bag to be positioned in a corresponding pocket). Suitably, the robot 211 releases the bag in a horizontal position. Suitably, the robot 211 can comprise an operating head (comprising the above-mentioned suction cup means) and one or more support arms. If necessary, the arms connect the operating head to a ceiling of the apparatus 1. Possibly the robot 211 could be a Cartesian system.

As will be explained in more detail below, the apparatus 1 advantageously comprises a first inspection station provided with several inspection modules each acting on a corresponding bag. One of these modules will be described in more detail, but the same considerations may be repeated for each of the modules. Further inspection stations may follow one another downstream of the first inspection station. They also comprise multiple inspection modules.

In the following, for ease of reading, particular reference is made to a "first bag". This is to better monitor the progress of a "sample bag" along the apparatus. The apparatus in the preferred solution processes both simultaneously and in succession a plurality of bags.

Suitably, the apparatus 1 comprises first means 31 for gripping a first bag, said first bag forming part of said bags. Suitably the first gripping means 31 is positioned at the advancement line 2. It preferably does not move back and forth along the advancement line 2. The first gripping means 31 is temporarily associated with a corresponding pocket placed along the advancement line 2. The first gripping means 31 may for example comprise a gripper. In particular, it comprises a first and a second jaw. The bag is destined to be clamped by the combination of the first and second jaw. The first and second jaw are hinged to each other or to a support. The first and second jaw operate on two opposite side faces of the bag. Suitably when the first bag lies substantially horizontal the first and second jaw grip the bag one from above and one from below.

Suitably the apparatus 1 comprises first means 41 for lifting at least one part of the first gripping means 31. The first lifting means 41 allow the inclination of the first gripping means 31 to be changed with respect to a fictitious horizontal plane.

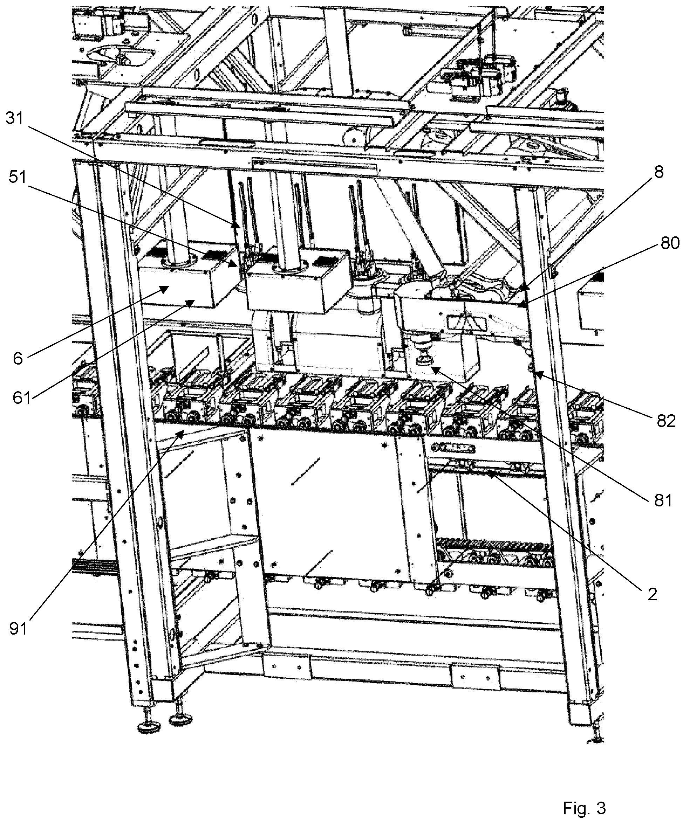

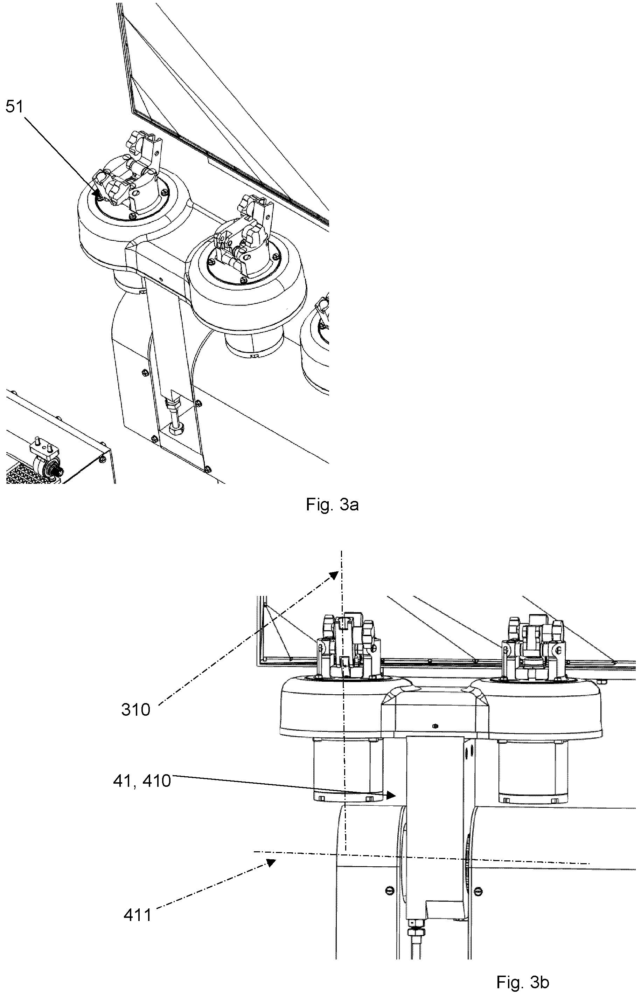

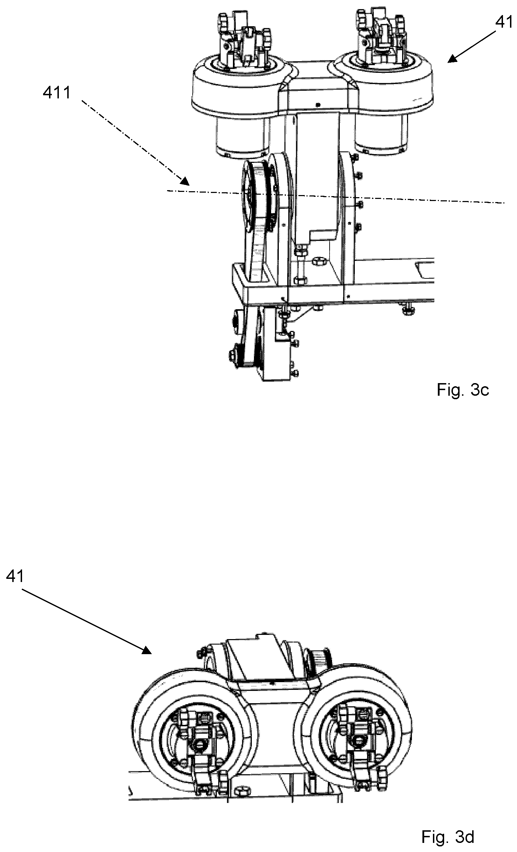

The first lifting means 41 allow in fact to bring the first bag from a substantially horizontal position (see in fig. 3d the configuration of the first means 41 in this situation) to a substantially vertical position (see in fig. 3c the configuration of the first means 41 in this situation).

In particular, the first lifting means 41 allow to rotate the first gripping means 31 around a first substantially horizontal straight line 411. The orientation of the first straight line 411 remains unchanged during operation of the apparatus 1. The first straight line 411 thus defines a rotation axis fixed in space. Suitably, said first straight line 411 is arranged parallel to the advancement line 2. The first lifting means 41 suitably allow a rotation around said first straight line 411 of the first gripping means 31 by an angle comprised between 0° and 120°. Suitably the first gripping means 31 can be overturned upwards by 90° by means of the first lifting means 41.

Suitably the first lifting means 41 comprise a first head 410 rotatable about the first straight line 411. The first gripping means 31 are constrained to the first rotatable head 410. Therefore, a rotation of the first lifting means 41 corresponds to a corresponding rotation of the first gripping means 31. Suitably, the apparatus 1 comprises first rotatable means 51 that places in rotation the first gripping means 31 on themselves around a first rotation axis 310 that is transverse to the line 2 for advancing the first bag along said apparatus 1. In particular, the first rotation axis 310 during operation moves while remaining in a plane substantially orthogonal to the advancement line 2 (evaluated at that point). The first axis 310 thus lies in a plane substantially orthogonal to the advancement of the bags along the advancement line 2. The first axis 310 is transverse (substantially orthogonal) to the first straight line 411 of the first lifting means 41. In particular, the first axis 310 and the first straight line 411 remain orthogonal during the entire operation of the apparatus 1.

The first rotatable means 51 can rotate the first bag after it has been lifted by the first lifting means 41. If necessary, this rotation can take place at least in part also during lifting by the first lifting means 41. Therefore, the apparatus 1 comprises synchronization means for the first gripping means 31, the first lifting means 41, the first rotatable means 51. In particular, in the preferred solution, the first gripping means 31, the first lifting means 41, the first rotatable means 51 intervene in succession.

The apparatus 1 also comprises means 6 for detecting defects of the first bag and/or its contents.

The means 6 for detecting defects comprises first means 61 for visual inspection of the first bag and/or its contents.

The first visual inspection means 61 comprises for example first means for detecting at least one image (e.g. a video camera or a camera).

The apparatus 1 suitably comprises means 60 for lighting the bags. In particular, the lighting means 60 is of LED type. In particular the first gripping means 31 (at least in a configuration in which they are sufficiently lifted by the first means 41) are positionable between the first visual inspection means 61 and the lighting means 60. Thus, the lighting means 60 could also be referred to as a backlight means.

The means 6 for detecting defects also comprises a unit for processing information coming from the first visual inspection means 61.

The apparatus 1 also comprises means 7 for rejecting the bags as a function of information coming from the means 6 for detecting defects. There is therefore a control unit that operates the rejecting means 7 as a function of the inputs coming from said processing unit that processes at least the information coming from the first visual inspection means 61 (and advantageously also from the visual inspection means 62 and/or 63 described below - whenever present).

In particular, a first rejecting zone 71 and a second rejecting zone 72 may be present. The rejecting means 7 can move the bags into the first or second rejecting zone 71, 72 as a function of the information coming from the means 6 for detecting defects.

Suitably the apparatus 1 comprises an unloading station 73, for example a tray or a belt on which the compliant bags are placed. Advantageously, the rejecting means 7 comprises a bag unloading robot 70 (for example of the pick&place type). Such a robot 70 can advantageously be used to position in the unloading station 73 the compliant bags (in an alternative solution the compliant bags could fall by gravity on the unloading station). The unloading robot 70 may be used to move the non-compliant bags in the first rejecting zone 71 and/or the second rejecting zone 72.

For example, the non-compliant bags may be placed in the first rejecting zone 71 due to problems related to the presence of particles. Still by way of example, in the second rejecting zone 72 the non-compliant bags can be placed due to cosmetic defects (for example writing with legibility problems; possibly there could also be problems related to the bag, for example inadequate sealing of the cap).

The apparatus 1 comprises means 20 for advancing the bags along the advancement line 2. The advancement means 20 is step advancement means. For example, the advancement means 20 comprises a conveyor, for example a conveyor belt and a motorization of the conveyor. The pockets 200 are constrained to the conveyor belt. Suitably the pockets 200 are distributed over the entire extent of the conveyor belt. Suitably the pockets 200 are in a single row. Suitably the pockets 200 are equally-spaced.

The apparatus 1 also comprises a system 8 for overturning the first bag.

The overturning system 8 causes a 180° rotation of the bags. This advantageously occurs around a vertical axis. The overturning system 8 moves the bags from a first position to a second position. The second position being overturned by 180° with respect to the first position around a vertical axis. Suitably, the first bag in both the first and second position is positioned in the same pocket.

The overturning system 8 comprises an overturning robot 80. Typically the robot 80 is a duopod. Suitably the robot 80 supports at least one overturning head 81. This head 81 is rotatable about a vertical axis. Advantageously, the robot 80 comprises at least two overturning heads 81, 82 for operating simultaneously on several bags. In this case the robot 80 supports the two overturning heads 81, 82 which are arranged in succession along the advancement line 2.

The robot 80 allows the overturning head 81 to be moved parallel to a vertical plane parallel to the advancement line 2 (in this area). In particular, the robot 80 allows a lifting/lowering and a forward/backward movement of the overturning head 81. Advantageously, these are the only movements permitted to the overturning head 81 in addition to rotation around a vertical axis. The same can be repeated for the possible overturning head 82.

The apparatus 1 also comprises second means 32 for gripping the first bag. Suitably the second gripping means 32 comprise a jaw. Suitably one or more of the features described with reference to the first gripping means 31 may be repeated for the second gripping means 32.

The apparatus 1 also comprises second lifting means 42 that cause lifting of the second gripping means 32.

This provides for rotating a second rotatable head 420 around a second straight line 421.

Suitably one or more of the features described with reference to the first lifting means 41 may be repeated for the second lifting means 42.

The second lifting means 42 change the inclination of the second gripping means 32 with respect to the fictitious horizontal plane. They therefore allow the bag to be arranged in a substantially vertical position to facilitate, for example, the viewing of suspended particles.

Suitably, the apparatus 1 comprises second rotatable means 52 that places in rotation the second gripping means 32 on themselves around a second rotation axis 320 transverse (preferably orthogonal) to a line 2 for advancing the first bag along the apparatus 1. Suitably one or more of the features described with reference to the first rotatable means 51 may be repeated for the second rotatable means 52.

The means 6 for detecting defects also comprise second means 62 for visual inspection of one of the bags and/or its contents. Suitably one or more of the features described with reference to the first inspection means 61 may be repeated for the second visual inspection means 62.

Thus also the information coming from the second visual inspection means 62 can be processed to provide information for controlling the rejecting means 7.

The second gripping means 32 and the second lifting means 42 are placed on the side of the advancement line 2. In particular, they are placed along the same side where the first gripping means 31 and the first lifting means 41 are placed.

The apparatus 1 also comprises additional means 33 for gripping the first bag. Suitably the additional gripping means 33 comprise a jaw. Suitably one or more of the features described with reference to the first gripping means 31 may be repeated for the additional gripping means 33.

The apparatus 1 also comprises additional lifting means 43 which cause lifting of the additional gripping means 33.

This provides for rotating an additional head 430 rotatable around an additional straight line 431.

Suitably one or more of the features described with reference to the first lifting means 41 may be repeated for the additional lifting means 43.

The additional lifting means 43 change the inclination of the additional gripping means 33 with respect to the fictitious horizontal plane. They therefore allow the bag to be arranged in a substantially vertical position to facilitate, for example, the viewing of suspended particles.

Suitably the apparatus 1 comprises additional rotatable means 53 that places in rotation the additional gripping means 33 on themselves around an additional rotation axis 330 which is transverse (preferably orthogonal) to a line 2 for advancing the first bag along the apparatus 1. Suitably one or more of the features described with reference to the first rotatable means 51 may be repeated for the additional rotatable means 53.

The means 6 for detecting defects also comprise additional means 63 for visual inspection of one of the bags and/or its contents. Suitably one or more of the features described with reference to the first inspection means 61 may be repeated for the additional visual inspection means 63.

Thus also the information coming from the additional visual inspection means 63 can be processed to provide information for controlling the rejecting means 7.

The additional gripping means 33 and the additional lifting means 43 are placed on the side of the advancement line 2. In particular, they are placed along the same side where the first gripping means 31 and the first lifting means 41 are placed.

As mentioned above, the apparatus 1 suitably comprises a first inspection station 91 that, in a same operating zone, comprises one or more of the following components: the first means 31 for gripping a first bag, the first means 41 for lifting the first gripping means 31, the first rotatable means 51, the first inspection means 61.

The apparatus 1 also comprises a second inspection station 92. The second inspection station 92 is positioned downstream of the first inspection station 91. Suitably it is also positioned downstream of the overturning system 8. The second operating station 92 comprises one or more of the following components: the second means 32 for gripping a first bag, the second lifting means 42 of the first gripping means, the second rotatable means 52, the second inspection means 62.

The overturning system 8 suitably intervenes between the first and second station 91, 92.

As mentioned above, the apparatus 1 suitably comprises an additional inspection station 93 which, in a same operating zone, comprises one or more of the following components: the additional means 33 for gripping a first bag, the additional means 43 for lifting the additional gripping means 33, the additional rotatable means 53, the additional inspection means 63. The first inspection station 91 comprises an inspection module 910 comprising the set: of the first means 31 for gripping a first bag, of the first means 41 for lifting the first gripping means, of the first rotatable means 51 and suitably of the first inspection means 61; said inspection module 910 is repeated a plurality of times in said first inspection station 91, each being destined for an inspection of one of said bags.

Advantageously, the first station 91 comprises more than one module. For example, the first inspection station 91 may comprise a plurality of modules (it should be noted that in this case the modules are functionally identical and operate in synchronization). If necessary, two modules can have components in common while performing their action on distinct bags (for example, in the illustrated solution, the lifting means are in common for two modules side by side). Suitably such modules may range from 2 to 6. In a preferred exemplary solution the modules are even numbered. In the accompanying figures the first inspection station 91 comprises four modules.

The pitch is a function of the number of inspection modules present in the first station 91. Suitably the pitch is equal to the distance between two homologous points placed on the first and on the last module of the first station 91.

The second inspection station 92 comprises a second inspection module 920 comprising the set: of the second means 32 for gripping a bag, of the second means 42 for lifting the second gripping means 32, of the second rotatable means 52 and suitably of the second inspection means 62. The second inspection module 920 is repeated a plurality of times at said second inspection station 92. Each module is destined for an inspection of one of said bags.

The number of the modules of the second station 92 advantageously equals the number of the modules of the first station 91.

For example, the second inspection station 92 may comprise a plurality of modules. Suitably the number of modules of the second station 92 may range from 2 to 6. In a preferred exemplary solution the modules are even numbered.

The additional inspection station 93 comprises an additional inspection module 930 comprising the set: of the additional means 33 for gripping a bag, of the additional means 43 for lifting the additional gripping means 33, of the additional rotatable means 53 and suitably of the additional inspection means 63. The additional inspection module 930 is repeated a plurality of times in said additional inspection station 93. Each module is destined for an inspection of one of said bags.

The number of the modules of the additional station 93 advantageously equals the number of the modules of the first station 91.

What is indicated for the first station 91 can also be repeated for the stations 92 and/or 93.

A reverse stroke 29 of the pockets is positioned underneath the advancement line 2. Suitably the conveyor belt extends between two end rollers. The lower section defines the reverse stroke 29. The upper section defines the advancement line 2.

The present invention also relates to a method for inspecting flexible bags containing a liquid or a viscous product. Such a method is advantageously implemented by an apparatus 1 having one or more of the features described previously. Advantageously the bags 10 are standardized. Advantageously, the bags 10 have a substantially quadrilateral perimeter. Suitably the bags 10 comprise a first end 111 and an opposite second end 112. For example, at the first end 111 there is at least one product insertion and/or extraction mouth (usually provided with a welded cap) while the second end 112 defines a bottom. The bags between the first and second end 111, 112 have two opposite side walls. The first and second end 111, 112 are positioned at opposite ends of the direction of greater extent of the first bag 11.

Suitably the method comprises the step of advancing the bags 10 along a feeding system 210. Such a feeding system 210 positions the bags on a loading station 21.

Suitably, the method provides for picking up a bag from the loading station 21 and positioning it along the advancement line 2. Suitably, a robot 211 picks up the bags from the loading station 21 in succession and arranges them in succession along the advancement line 2.

Suitably, the robot 211 places the bags in corresponding pockets 200 placed along the advancement line 2. These pockets 200 define housings. The robot 211 positions the bags 10 on the advancement line 2 according to a predetermined orientation. Suitably, the robot 211 positions the bags horizontally on the advancement line 2.

Suitably the method comprises a step of gripping a first bag 11 placed along the advancement line 2 by means of first gripping means 31.

The method also comprises the step of lifting at least one part of the first bag 11 gripped by the first gripping means 31. This step is implemented by the first lifting means 41. This occurs by changing the inclination of the first bag 11 with respect to a fictitious horizontal plane and by positioning a first end 111 of the first bag 11 higher up than a second end 112 of the first bag 11. In doing so, the first gripping means 31 continue to clamp the first bag 11. Conveniently, the first gripping means 31 grip the first bag 11 for more than half the length of the first bag 11 (this length is evaluated between the first and second end 111, 112; the first and second end 111, 112 are positioned at the ends of the bag, evaluated along the greater length). The step of lifting at least one part of the first bag 11 provides for rotating a first rotatable head 410. Suitably, this occurs around a first straight line 411 (see also what is indicated above).

The method comprises the step of placing in rotation the first bag 11 on itself around a first rotation axis 310 transverse to the line 2 for advancing the bags 10. This step is implemented by first rotatable means 51. The step of placing in rotation the first bag 11 occurs during and/or after the step of lifting the first bag 11 (preferably at the end of the step of lifting the first bag 11). The step of placing in rotation the first bag 11 on itself occurs with the first end 111 higher up than the second end 112. Advantageously, the first bag 11 is placed in rotation when it is substantially vertical.

Advantageously, the method comprises the step of seeking the defects in the first bag 11 placed along the advancement line 2. The step of seeking the defects in turn comprises the step of performing an inspection by means of first visual inspection means 61. Typically this occurs by performing a visual inspection during the step of placing in rotation the first bag 11 on itself or at the end of this operation. This occurs when the first bag 11 is still lifted with respect to the advancement line 2.

The method also provides for repositioning the first bag 11 on the advancement line 2. The first gripping means 31 are thus released.

Suitably the first means 31 for gripping a first bag, the first means 41 for lifting the first gripping means 31, the first rotatable means 51, the first inspection means 61 define a first inspection module 910 placed in a first inspection station 91 which in turn comprises several inspection modules functionally the same as the first inspection module 910. The inspection modules are side by side in succession along the advancement line 2. Suitably all the inspection modules of the first station 91 perform their action on corresponding bags at least in part at the same time. Preferably they perform their action at the same time. In particular, all modules end their action at the same time.

The method also comprises the step of advancing the bags 10 along the advancement line 2. This occurs by advancing the bags 10 along a linear trajectory and not in a carousel rotatable around a rotation axis. The step of advancing the bags 10 along the advancement line 2 occurs in a discontinuous manner in steps. This implies that the bags undergo the following procedure iteratively:
- an inspection or handling while the advancement line 2 is stopped;
- an advancement by a predetermined step.

Advantageously this is repeated at least two or three times.

Suitably, the method comprises the step of rejecting the bags along the advancement line 2 as a function of information coming from the step of seeking defects in the first bag 11.

Suitably, the method provides for overturning the first bag 11 by 180° around a vertical rotation axis.

In this way the first end 111 and the second end 112 of the first bag 11 are inverted along the advancement line 2. If previously the first end 111 was oriented towards a first lateral side of the apparatus 1 it is now oriented towards an opposite second lateral side of the apparatus 1.

The method provides for advancing the bags along the advancement line 2. Thus, the first bag 11 is advanced by the predetermined step along the advancement line 2. The method then comprises the steps of:
- gripping the first bag 11 by means of second gripping means 32;
- lifting at least one part of the first bag 11 gripped by the second gripping means 32, changing the inclination of the first bag 11 with respect to a fictitious horizontal plane and positioning a second end 112 of the first bag 11 higher up than a first end 111 of the first bag 11. In fact, the first and second lifting means 41, 42 are arranged on the same lateral side of the apparatus 1, but in the meantime the first bag has been overturned around a vertical axis; this step is implemented by second lifting means 42;
- placing in rotation the first bag 11 on itself around a second rotation axis 310 transverse to the line 2 for advancing the bags 10; the step of placing in rotation the first bag 11 gripped by the second gripping means 32 occurs during and/or after the step of lifting the first bag 11. This step is implemented by second rotatable means 52.

The step of seeking defects in the first bag thus comprises inspecting again the first bag by means of second inspection means 62.

The method then provides for repositioning the first bag on the advancement line 2. The second gripping means 32 are thus released.

Suitably the second means 32 for gripping a first bag 11, the second means 42 for lifting the second gripping means 32, the second rotatable means 52, the second inspection means 62 define a second inspection module 920 placed in a second inspection station 92 which in turn comprises several inspection modules functionally equal to the second inspection module 920. The inspection modules of the second station 92 are side by side along the advancement line 2. Suitably all the inspection modules of the second station 92 perform their action on corresponding bags at least in part at the same time. Preferably they perform their action at the same time. In particular, all modules end their action at the same time.

Advantageously, while the inspection modules of the second station 92 perform their action on one group of bags, the inspection modules of the first station 91 perform their action on another group of bags.

The method provides for advancing the bags again along the advancement line 2. Thus, the first bag 11 is advanced by the predetermined step along the advancement line 2. The method then comprises the steps of:
- gripping the first bag 11 by means of additional gripping means 33;
- lifting at least one part of the first bag 11 gripped by the additional gripping means 33, changing the inclination of the first bag 11 with respect to a fictitious horizontal plane; suitably this provides, for example, for positioning a second end 112 of the first bag 11 higher up than a first end 111 of the first bag 11;
- placing in rotation the first bag 11 on itself around an additional rotation axis 330 transverse to the line 2 for advancing the bags 10; the step of placing in rotation the first bag 11 gripped by the additional gripping means 33 occurs during and/or after the step of lifting the first bag 11.

The step of seeking defects in the first bag 11 therefore comprises inspecting again the first bag by means of additional inspection means 63 (this occurs while the first bag 11 gripped by the additional gripping means 63 is at least partially lifted with respect to the advancement line 2).

The method then provides for repositioning the first bag on the advancement line 2. The additional gripping means 33 are thus released.

Suitably the additional means 33 for gripping the first bag 11, the additional means 43 for lifting the additional gripping means 33, the additional rotatable means 53, the additional inspection means 63 define an additional inspection module 930 placed in an additional inspection station 93 which in turn comprises several inspection modules functionally equal to the additional inspection module 930. The additional inspection modules of the station 93 are side by side along the advancement line 2. Suitably all the inspection modules of the additional station 93 perform their action on corresponding bags at least in part at the same time. Preferably they perform their action at the same time. In particular, all modules end their action at the same time.

Advantageously, while the inspection modules of the additional station 93 perform their action on one group of bags, the inspection modules of the first and second station 91, 92 perform their action on other groups of bags.

The method therefore provides for rejecting the non-compliant bags as a function of the information received during the step of seeking the defects in the first bag 11.

Summarizing, in an exemplary and non-limiting solution, the bags:
- are positioned in a first station 91 where they undergo a first inspection;
- are advanced by the predetermined step;
- undergo an overturning by means of the system 8 (in this way they are rotated by 180°);
- are advanced by the predetermined step and arrive at the second station 92;
- undergo a second inspection in the second station 92; in this regard they are placed in rotation vertically, but the upper end of the bag is the one that was positioned lower down in the first station during the inspection (this by virtue of the previous overturning; this measure is aimed at facilitating a more complete inspection and suspending any particles attached to the walls)
- are advanced by the predetermined step and arrive at the additional station 93;
- undergo an additional inspection in the second additional station 93; (this additional inspection is aimed, for example, at identifying particles that are positioned at the free surface); in any case, the number and type of inspection stations may also vary depending on the specific needs of the customer;
- are possibly rejected if the carried out inspections have highlighted defects.

The present invention achieves important advantages.

First of all, it allows optimizing the spatial footprint. In fact, the apparatus 1 assumes an elongated shape that can be more easily placed in place of the workbenches where, according to the known art, operators inspect the bags by hand.

A further ancillary advantage is to optimize the structure of the apparatus placing the electronics in a fixed zone and leaving the mechanical actuators to move.

The invention thus conceived is susceptible of numerous modifications and variants, all falling within the scope of the inventive concept that characterises it. Moreover, all the details may be replaced by other technically equivalent elements. All the materials used, as well the dimensions, may in practice be any whatsoever according to needs.

## Claims

1. An apparatus for inspecting flexible bags containing a liquid or viscous product comprising:
- a line (2) for advancing the bags;
- first means (31) for gripping a first bag, said first bag forming part of said bags;
- first means (41) for lifting at least one part of the first gripping means (31); said first lifting means (41) allowing the inclination of the first gripping means (31) to be changed with respect to a fictitious horizontal plane;
- first rotatable means (51) that places in rotation the first gripping means (31) on themselves with respect to a first rotation axis (310), preferably said first rotation axis (310) being transverse to the line (2) for advancing the first bag along said apparatus;
- means (6) for detecting defects of the bags and/or their contents; said means (6) for detecting defects comprising first means (61) for visual inspection of the first bag and/or its contents;
- means (7) for rejecting the bags as a function of information coming from the means (6) for detecting defects;
**characterised in that** it is a linear machine, not a carousel rotatable around its own rotation axis.

2. The apparatus according to claim 1, **characterized in that** said line (2) for advancing the bags is rectilinear.

3. The apparatus according to claim 2, **characterized in that** it comprises means (20) for advancing the bags along the advancement line (2); said advancement means (20) is step advancement means.

4. The apparatus according to any one of the preceding claims, **characterised in that** it comprises:
- a system (8) for overturning the bag between a first and a second position; said second position being rotated by 180° around a vertical axis;
- second means (32) for gripping the first bag;
- second lifting means (42) that cause lifting of the second gripping means (32); said second lifting means (42) changing the inclination of the second gripping means (32) with respect to a fictitious horizontal plane;
- second rotatable means (52) that places in rotation the second gripping means (32) on themselves with respect to a second rotation axis (320) transverse to a line (2) for advancing the first bag along said apparatus (1);
- second means (62) for visual inspection of the first bag and/or its contents; said second visual inspection means (62) forming part of the means (6) for detecting defects.

5. The apparatus according to claim 4, **characterised in that** it comprises:
- a first inspection station (91) that, in a same operating zone, comprises: the first means (31) for gripping a first bag, the first means (41) for lifting the first gripping means (31), the first rotatable means (51), the first inspection means (61);
- a second inspection station (92) that, in a same operating zone, comprises: the second means (32) for gripping a first bag, the second means (42) for lifting the first gripping means, the second rotatable means (52), the second inspection means (62).

6. The apparatus according to claim 5, **characterised in that** said first inspection station (91) comprises an inspection module (910) comprising the set of the first means (31) for gripping a first bag, of the first means (41) for lifting the first gripping means, of the first rotatable means (51), of the first visual inspection means (61); said inspection module (910) being repeated a plurality of times in said first inspection station (91), each being destined to inspect a corresponding bag.

7. The apparatus according to claim 5 or 6, **characterised in that** said advancement line (2) comprises a plurality of pockets (200) that advance in steps one together with the others; said step being equal to the distance between matching points of the first and of the last inspection module present in the first station (91); a reverse stroke (29) of said pockets being positioned underneath the advancement line (2).

8. The apparatus according to any one of the preceding claims, **characterised in that** the first gripping means (31), the first rotatable means (51), the first visual inspection means (61) are positioned in predetermined zones that are fixed with respect to the advancement line (2).

9. The apparatus according to any one of the preceding claims, **characterised in that** the first gripping means (31) does not move back and forth along the advancement line (2).

10. A method for inspecting flexible bags containing a liquid or a viscous product, said method comprising the steps of:
- gripping a first bag (11) placed along an advancement line (2) by means of first gripping means (31); said first bag (11) forming part of said flexible bags (10);
- lifting at least one part of the first bag (11) gripped by the first gripping means (31), changing the inclination of the first bag (11) with respect to a fictitious horizontal plane and positioning a first end (111) of the first bag (11) higher up than a second end (112) of the first bag (11);
- placing in rotation the first bag (11) on itself around a first rotation axis (310), preferably transverse to the line (2) for advancing the bags (10); the step of placing in rotation the first bag (11) occurring during and/or after the step of lifting the first bag (11);
- seeking defects in the first bag (11) placed along the advancement line (2), said step of seeking the defects comprising in turn the step of performing an inspection by means of first visual inspection means (61);
- advancing the bags (10) along the advancement line (2);
- rejecting the bags along the advancement line (2) as a function of information coming from the step of seeking defects in the first bag (11); **characterised in that** the step of advancing the bags (10) along the advancement line (2) comprises the step of advancing the bags (10) along a linear trajectory and not on a carousel rotatable around a rotation axis.

11. The method according to claim 10, **characterised in that** it advances the bags (10) along the advancement line (2) in a discontinuous manner in steps.

12. The method according to claim 10 or 11, **characterised in that** the method comprises the step of overturning the first bag (11) by 180° around a vertical rotation axis; in this way the first end (111) and the second end (112) of the first bag (11) are inverted along the advancement line (2).

13. The method according to any of the claims from 10 to 12, **characterised in that**:
- the step of lifting at least one part of the first bag (11) gripped by the first gripping means (31) is implemented by the first lifting means (41);
- the step of placing in rotation the first bag (11) on itself around a first rotation axis (310) transverse to the line (2) for advancing the bags (10) is implemented by first rotatable means (51);
the first means (31) for gripping a first bag, the first means (41) for lifting the first gripping means (31), the first rotatable means (51), the first inspection means (61) defining a first inspection module (910) placed in a first inspection station (91) which in turn comprises several inspection modules functionally the same as the first inspection module (910); the inspection modules being side by side in succession along the advancement line (2); all the inspection modules of the first station (91) performing their action on corresponding bags at least in part at the same time.

14. The method according to any of claims from 10 to 13, **characterised in that** the method comprises the steps of:
- gripping the first bag (11) by means of second gripping means (32);
- lifting at least one part of the first bag (11) gripped by the second gripping means (32) by second lifting means (42) changing the inclination of the first bag (11) with respect to a fictitious horizontal plane and positioning a second end (112) of the first bag (11) higher up than a first end (111) of the first bag (11);
- placing in rotation the first bag (11) on itself around a second rotation axis (310) transverse to the line (2) for advancing the bags (10); the step of placing in rotation the first bag (11) gripped by the second gripping means (32) occurs during and/or after the step of lifting the first bag (11) and being implemented by second rotatable means (52); the step of seeking defects in the first bag thus comprising inspecting again the first bag by means of second inspection means (62);
- repositioning the first bag on the advancement line (2).

15. The method according to claim 14, **characterised in that** the second means (32) for gripping a first bag (11), the second means (42) for lifting the second gripping means (32), the second rotatable means (52), the second inspection means (62) define a second inspection module (920) placed in a second inspection station (92) which in turn comprises several inspection modules functionally equal to the second inspection module (920); the inspection modules of the second station (92) being side by side along the advancement line (2); all the inspection modules of the second station (92) performing their action on corresponding bags at least in part at the same time.
